# EUROPÄISCHE PATENTANMELDUNG

(11) **EP 2 556 983 A1**
(43) Veröffentlichungstag der Anmeldung: **13.02.2013**
(21) Anmeldenummer: 11176938.6
(22) Anmeldetag: 09.08.2011
(51) Int. Cl.: B60L 7/22, B60L 11/18

(54) **Verfahren zum Aufladen eines Akkumulators mit Hilfe eines Energierückgewinnungssystems und Antriebseinheit für ein Elektro- oder Hybridfahrzeug**

(71) Anmelder: Siemens Aktiengesellschaft, 80333 München (DE)
(72) Erfinder: Zatocil, Heiko, 90429 Nürnberg (DE)

(57) **Zusammenfassung**

Die Erfindung betrifft ein Verfahren zum Aufladen eines Akkumulators (10) eines Elektro- oder Hybridfahrzeugs (4) mit Hilfe eines Energierückgewinnungssystems (2), wobei ein Teil der mit dem Energierückgewinnungssystems (2) generierten elektrischen Energie in Nutzwärme umgewandelt wird, um damit die Temperatur im Innenraum (18) des Elektro- bzw. Hybridfahrzeugs (4) zu regulieren.

## Beschreibung

Die Erfindung betrifft ein Verfahren zum Aufladen eines Akkumulators eines Elektro- oder Hybridfahrzeugs mit Hilfe eines Energierückgewinnungssystems. Die Erfindung betrifft weiter eine Antriebseinheit für ein Elektro- oder Hybridfahrzeug.

Sowohl in Elektrofahrzeugen als auch in Hybridfahrzeugen kommen üblicherweise Energierückgewinnungssysteme zum Einsatz, mit denen ein Teil der kinetischen Energie bei einem Bremsvorgang in elektrische Energie umgewandelt und nachfolgend in einen Akkumulator zwischengespeichert wird. Mit Hilfe der im Akkumulator zwischengespeicherten Energie wiederum erfolgt die Versorgung eines Elektromotors, der das Fahrzeug antreibt oder der - bei einem Hybridfahrzeug - einen Verbrennungsmotor beim Antreiben des Fahrzeugs unterstützt.

Bei Akkumulatoren der aktuellen Generation besteht das Problem, dass sich nicht immer die gesamte vom Energierückgewinnungssystem generierte elektrische Energie auch in den Akkumulator einspeisen lässt. Daher wird derzeit, auch zum Schutz des Energierückgewinnungssystems und des Akkumulators vor schädlichen Spannungs- oder Stromspitzen, ein Teil der kinetischen Energie mit Hilfe von Bremsen dissipiert und bleibt somit ungenutzt.

Ausgehend hiervon liegt der Erfindung die Aufgabe zugrunde, ein Verfahren oder eine Vorrichtung anzugeben, mit dessen bzw. mit deren Hilfe sich ein Energierückgewinnungssystem noch effektiver nutzen lässt.

Bezüglich des Verfahrens wird diese Aufgabe erfindungsgemäß durch die Merkmale des Anspruchs 1 gelöst. Die rückbezogenen Ansprüche beinhalten teilweise vorteilhafte und teilweise für sich selbst erfinderische Weiterbildungen dieser Erfindung. Bezüglich der Vorrichtung wird diese Aufgabe erfindungsgemäß durch die Merkmale des Anspruchs 9 gelöst.

Die Erfindung betrifft ein Verfahren zum Aufladen eines Akkumulators eines Elektro- oder Hybridfahrzeugs, nachfolgend kurz Fahrzeug genannt, mit Hilfe eines Energierückgewinnungssystems. Hierzu wird ein Teil der kinetischen Energie des Fahrzeugs bei einem Bremsvorgang in elektrische Energie umgewandelt, wobei nachfolgend ein Teil der mit dem Energierückgewinnungssystem generierten elektrischen Energie in einem Akkumulator zwischengespeichert wird und wobei ein weiterer Teil der generierten elektrischen Energie in Nutzwärme umgewandelt wird, um damit die Temperatur im Innenraum und insbesondere im Fahrgastraum des Fahrzeugs zu regulieren. Somit wird bei jedem Bremsvorgang ein größerer Anteil der kinetischen Energie des Fahrzeugs nutzbar gemacht.

An dieser Stelle sei angemerkt, dass ein typisches Energierückgewinnungssystem, wie es dem Fachmann aus dem Bereich Fahrzeugbau prinzipiell bekannt ist, eine größere elektrische Leistung abzugeben vermag, als ein typischer Akkumulator aufzunehmen im Stande ist. Selbst bei Akkumulatoren der neuesten Generation auf Lithiumbasis, sogenannten Lithium-Ionen-Akkus, ist die maximal zulässige Ladestromstärke üblicherweise kleiner als die maximale Stromstärke eines bei einem einfachen Bremsvorgang mit einem Generator und einem nachgeschalteten Umrichter generierbaren Strompulses. Zur Vermeidung schädlicher Ladestromstärken oder Spannungsspitzen im Energierückgewinnungssystem wird daher bisher ein wesentlicher Teil der kinetischen Energie des Fahrzeugs bei jedem Bremsvorgang mit Hilfe von Bremsen in thermische Energie umgewandelt, die sich jedoch auch aufgrund der Anordnung der Bremsen im Fahrzeug dissipiert.

Um den Anteil der nutzbaren Energie der kinetischen Energie zu erhöhen, wird nunmehr ein größerer Anteil der kinetischen Energie mit Hilfe des Energierückgewinnungssystems in elektrische Energie umgewandelt. Zudem wird dafür Sorge getragen, dass der Ladestrom für den Akkumulator einen vorgesehenen Maximalwert nicht übersteigt, so dass der Akkumulator durch die zusätzliche generierte elektrische Energie nicht beschädigt wird. Stattdessen wird der Überschuss an elektrischer Energie innerhalb des Fahrzeugs in Nutzwärme umgewandelt, wobei diese Nutzwärme insbesondere zur Regulierung der Temperatur im Innenraum des Fahrzeugs herangezogen wird.

Dieses Konzept stellt insbesondere für reine Elektrofahrzeuge einen Vorteil dar, da hier üblicherweise kein Verbrennungsmotor zum Einsatz kommt. Da die Abwärme des elektrischen Antriebs bedeutend geringer ist, als bei einem Antrieb mit Verbrennungsmotor, muss der Innenraum des Fahrzeugs, und insbesondere der Fahrgastraum, bei Wärmebedarf mit Hilfe einer zusätzlichen Wärmequelle geheizt werden. Während also bei einem Fahrzeug mit Verbrennungsmotor die Abwärme des Verbrennungsmotors ausreicht, um beispielsweise den Fahrgastraum auch bei Temperaturen unter 0°C auf über 15°C zu erwärmen, genügt die Abwärme eines elektrischen Antriebs nicht, um in einem solchen Fall eine vergleichbare Temperierung des Fahrgastraums zu bewirken. Daher wird derzeit üblicherweise ein Teil der im Akkumulator zwischengespeicherten elektrischen Energie genutzt, um mit Hilfe eines elektrischen Heizsystems den Fahrgastraum zu erwärmen. Dies jedoch führt zu einer verringerten Laufleistung des Elektrofahrzeugs, die mit einer Akkumulatorladung erzielbar ist. Zwar erfolgt die Erwärmung des Fahrgastraums gemäß der hier vorgestellten Lösung ebenfalls mit Hilfe eines elektrischen Heizsystems, jedoch wird die hierfür notwendige elektrische Energie nicht dem Akkumulator entzogen, sondern mit Hilfe des Energierückgewinnungssystems beim Bremsvorgang generiert. Die Heizung des Fahrgastraums geht somit nicht mehr zu Lasten der (benötigten) Laufleistung des Elektrofahrzeugs.

Alternativ oder ergänzend lässt sich die so generierte Nutzwärme einsetzen, um beispielsweise einen Ölkreislauf zu beheizen, welcher zum Schmieren von beweglichen Teilen vorgesehen oder welcher Teil eines Hydrauliksystems ist.

Einer bevorzugten Verfahrensvariante entsprechend, werden zur Bildung des Energierückgewinnungssystems ein Elektromotor des Fahrzeugs sowie eine zwischen Elektromotor und Akkumulator geschaltete Wandlerschaltung eingesetzt. Die Nutzung desselben Elektromotors sowohl als Antriebsmotor für das Fahrzeug als auch als Generator zur Umwandlung von kinetischer in elektrische Energie im Rahmen der Energierückgewinnung bedingt eine vergleichsweise geringe Anzahl von Bauteilen und somit einen vereinfachten Aufbau des Fahrzeugs.

Zweckmäßig wird zur Erzeugung der Nutzwärme ein einfacher Heizwiderstand oder aber eine Anordnung von mehreren Heizwiderständen eingesetzt. Hierdurch wird der Zielsetzung, ein möglichst einfach zu fertigendes und kostengünstiges elektrisches Heizsystem zu realisieren, Rechnung getragen. Alternativ dazu ist ein elektrisches Heizsystem vorgesehen, bei dem durch Wirbelströme elektrische Energie in Wärme umgewandelt wird. Ein derartiges System eignet sich insbesondere zur Beheizung eines Öl- oder Wasserkreislaufs.

In vorteilhafter Weiterbildung des Verfahrens ist der Heizwiderstand bzw. die Anordnung aus Heizwiderständen in die Wandlerschaltung integriert. Dabei ist der Heizwiderstand bzw. die Anordnung von Heizwiderständen vorzugsweise parallel zu einem Glättungskondensator geschaltet, der zur Ausbildung eines Zwischenkreises zwischen der Wandlerschaltung und dem Akkumulator dient. Auf diese Weise lässt sich der Ladestrom zum Akkumulator besonders einfach begrenzen, sodass der gewünschte Schutz für den Akkumulator vor Strom- oder Spannungsspitzen gegeben ist.

Weiter ist im Rahmen der Erfindung eine zweckmäßige Verfahrensvariante, bei der die Nutzwärme mittels gerichtetem Luftstrom in den Innenraum und insbesondere in den Fahrgastraum des Fahrzeugs transportiert wird. Bevorzugt wird hierbei eine Ausgestaltung, die es dem Bediener des Fahrzeugs erlaubt, zwischen einem Umluft-Strom, bei dem die Luft im Wesentlichen innerhalb des Fahrzeugs zirkuliert und dabei die Nutzwärme fortlaufend aufnimmt, und einem Frischluft-Strom, bei dem Luft aus der Umgebung des Fahrzeugs in den Fahrgastinnenraum geführt wird und dabei einmalig den Bereich passiert, in dem die Nutzwärme erzeugt wird, zu wählen. Ein ähnliches System zur Beheizung des Fahrgastinnenraums kommt auch bei Fahrzeugen mit einem Verbrennungsmotor als Wärmequelle zum Einsatz, so dass hier vorteilhafterweise nach dem Baukastenprinzip einzelne Bauteile für das Elektro- oder Hybridfahrzeug übernommen werden können.

Gemäß einer weiteren zweckmäßigen Verfahrensvariante wird die erzeugte Nutzwärme in einem Wärmespeicher zwischengespeichert. Die so zwischengespeicherte Wärme lässt sich dann bei Bedarf abrufen, so dass sich hierdurch beispielsweise ein Pendant zur sogenannten Standheizung realisieren lässt.

Vorteilhafterweise wird als Wärmespeicher für die Zwischenspeicherung der Nutzwärme ein Kühlkreislauf des Fahrzeugs genutzt. Häufig ist ein solcher Kühlkreislauf für das Fahrzeug vorgesehen, um beispielsweise nicht nutzbare Abwärme des Fahrzeugs abzuführen und dazu an die Umgebung abzugeben oder beispielsweise um einen Ölkreislauf zu heizen. Ein solcher Kühlkreislauf lässt sich auch zur Zwischenspeicherung der Nutzwärme einsetzen, sodass hierfür kein zusätzlicher Wärmespeicher vorgesehen werden muss.

Darüber hinaus ist es vorteilhaft, das Verfahren derart zu gestalten, das die Erzeugung der Nutzwärme im Bedarfsfall vom Bediener des Fahrzeugs ausgesetzt werden kann. Wenn also eine Erwärmung des Fahrgastraums nicht gewünscht ist, so lässt sich entweder die Nutzwärme in einem Wärmespeicher zwischenspeichern oder es wird auf die Generierung überschüssiger elektrischer Energie verzichtet und die entsprechende kinetische Energie wird statt dessen mit Hilfe der Bremsen in thermische Energie umgewandelt.

Die Erfindung wird nachfolgend anhand einer schematischen Zeichnung näher erläutert. Darin zeigen:
- FIG 1: in einer Blockschaltbilddarstellung eine Antriebseinheit eines Elektro- oder Hybridfahrzeugs,
- FIG 2: in einer Blockschaltbilddarstellung eine Vorrichtung zum Wärmen des Innenraums des Elektro- oder Hybridfahrzeugs,
- FIG 3: in einer Blockschaltbilddarstellung eine alternative Vorrichtung zum Wärmen des Innenraums des Elektro- oder Hybridfahrzeugs.

Einander entsprechende Teile sind in allen Figuren mit den gleichen Bezugszeichen versehen.

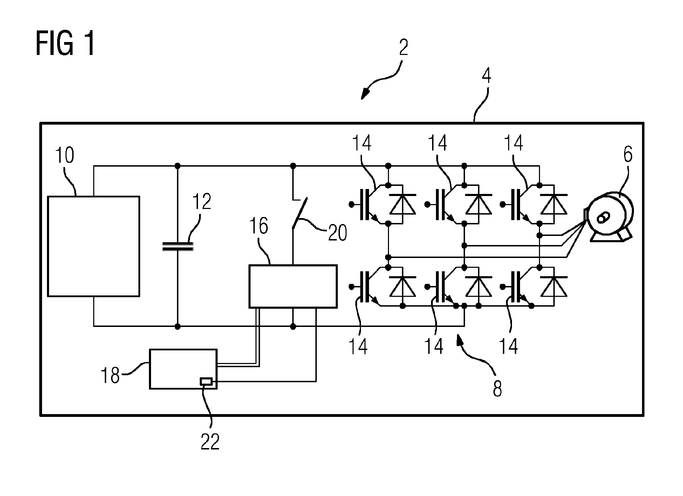

Die in FIG 1 schematisch dargestellte Antriebseinheit 2 ist als Baugruppe für ein Elektro- oder Hybridfahrzeug, nachfolgend kurz Fahrzeug 4 genannt, vorgesehen, wobei die Antriebseinheit 2 im Falle des Elektrofahrzeugs dieses antreibt und im Falle des Hybridfahrzeugs einen Verbrennungsmotor in nicht näher dargestellter Weise unterstützt. Hierzu umfasst die Antriebseinheit 2 einen Elektromotor 6, eine Wandlerschaltung 8 und als Energiespeicher einen Akkumulator 10.

Darüber hinaus fungiert die Antriebseinheit 2 als Energierückgewinnungssystem 2, mit dessen Hilfe ein Teil der kinetischen Energie des Fahrzeugs 4 bei einem Bremsvorgang in elektrische Energie umgewandelt und im Akkumulator 10 zwischengespeichert wird. Dementsprechend arbeitet der Elektromotor 6 während jedem Bremsvorgang nach dem Prinzip eines Generators 6 und die Wandlerschaltung 8 als Gleichrichterschaltung 8.

Weiter umfasst die Antriebseinheit 2 einen Glättungskondensator 12, der als Puffer zwischen dem Akkumulator 10 und der Wandlerschaltung 8 zwischengeschaltet ist und damit einen sogenannten Zwischenkreis ausbildet. Die Funktionsweise des Energierückgewinnungssystems 2 lässt sich dementsprechend vereinfacht wie folgt beschreiben: Beim Bremsvorgang wird der Generator 6 angetrieben, wodurch dieser elektrische Energie pulsartig in die Wandlerschaltung 8 einkoppelt. Die Wandlerschaltung 8, welche vorzugsweise aus ansteuerbaren Halbleitertransistoren 14, wie MOSFETs oder IGBTs, aufgebaut ist, generiert basierend auf der zur Verfügung stehenden elektrischen Energie durch geeignete Ansteuerung Strompulse, mit denen der nachgeschaltete Glättungskondensator 12 aufgeladen wird. Der Glättungskondensator 12 wiederum fungiert als Stromquelle für den Akkumulator 10, wobei ein vom Ladungszustand des Glättungskondensators 12 abhängiger Ladestrom zum Akkumulator 10 fließt. Die Ansteuerung der Halbleitertransistoren 14 wird dabei derart vorgenommen, dass der Ladezustand des Glättungskondensators 12 im zeitlichen Mittel im Wesentlichen konstant ist, solange der Bremsvorgang andauert und der Generator 6 ausreichend elektrische Energie zur Verfügung stellt. Jener Ladungszustand ist hierbei so gewählt, dass möglichst viel elektrische Energie im entsprechenden Zeitintervall in den Akkumulator 10 eingespeist wird.

Weiter ist für die Antriebseinheit 2 eine Vorrichtung 16 vorgesehen, mittels derer ein Teil der mit dem Energierückgewinnungssystem 2 generierten elektrischen Energie in Nutzwärme umgewandelt wird, um damit die Temperatur im Fahrgastraum 18 des Fahrzeugs 4 zu regulieren. Jene Vorrichtung 16 ist dabei als elektrischer Verbraucher parallel zum Glättungskondensator 12 geschalten, wobei insbesondere ein Schalter 20 zum Einsatz kommt, mit dem sich die Vorrichtung 16 bei Bedarf durch den Bediener des Fahrzeugs 4 von der elektrischen Versorgung trennen lässt.

Zur Temperierung des Fahrgastraums 18 wird die mit Hilfe der Vorrichtung 16 erzeugte Nutzwärme in den Fahrgastraum 18 eingekoppelt, wodurch sich die Temperatur im Fahrgastraum 18 allmählich erhöht. Der Temperaturwert wird dabei von einem Temperatursensor 22 überwacht und die entsprechenden Sensordaten werden zur Weiterverarbeitung an die Vorrichtung 16 übermittelt. Sobald ein vom Bediener über ein Bedienelement vorgegebener Temperaturwert erreicht ist, stoppt die Vorrichtung 16 die Generierung von Nutzwärme oder den Transport der Nutzwärme hin zum Fahrgastraum 18, so dass eine weitere Temperaturerhöhung unterbleibt. Sinkt die Temperatur aufgrund von Wärmeabgabe an die Umgebung wieder unter den vorgegebenen Wert, so wird die Erzeugung von Nutzwärme bzw. der Transport der Nutzwärme in den Fahrgastraum 18 wieder aufgenommen. Auf diese Weise lässt sich die Temperatur im Fahrgastraum 18 derart regulieren, dass ein vom Bediener vorgegebener Temperaturwert erreicht und nachfolgend gehalten wird. Die dafür notwendige Energie wird dabei zumindest teilweise vom Energierückgewinnungssystem 2 zur Verfügung gestellt und muss dementsprechend nicht dem Akkumulator 10 entzogen werden, was die mit einer Akkumulatorladung erzielbare Laufleistung des Fahrzeugs 4 erhöht.

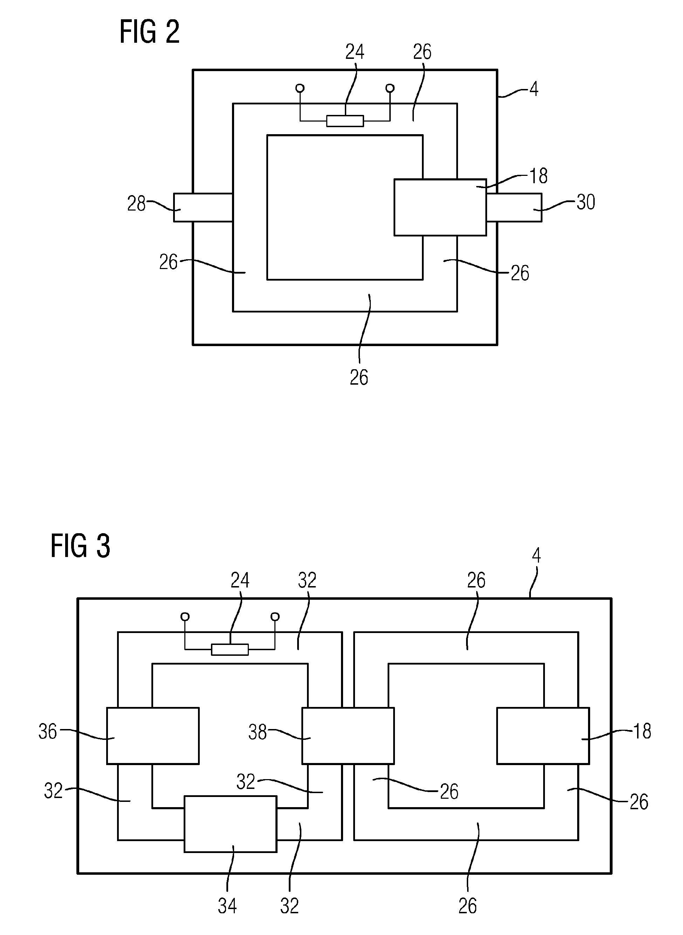

Eine mögliche Gestaltung der Vorrichtung 16 ist in FIG 2 skizziert. Die Umwandlung von elektrischer in thermische Energie erfolgt hier mit Hilfe eines Heizwiderstandes 24, der als einfache Glühwendel ausgebildet ist. Jene Glühwendel wird in einem Luftschacht 26 positioniert, welche Teil eines in Fahrzeugen 4 üblichen Belüftungssystems ist. Für ein solches Belüftungssystem sind typischerweise zumindest zwei Betriebsmodi vorgesehen. Im ersten Betriebsmodus wird die Luft im Fahrzeug 4 permanent umgewälzt und dabei immer wieder am Heizwiderstand 24 vorbeigeführt. Dagegen wird im zweiten Betriebsmodus Luft aus der Umgebung mittels einer Ansaugvorrichtung 28 in das Belüftungssystem eingesaugt, nachfolgend am Heizwiderstand 24 vorbeigeführt und schließlich in den Fahrgastraum 18 eingeleitet. In beiden Betriebsmodi dringt ein Teil der vom Heizwiderstand 24 erwärmten Luft aufgrund von Überdruck aus dem nicht gasdicht abgeschlossenen Fahrgastraum 18 und entweicht somit durch kleine Öffnungen 30 in die Umgebung. Für den Wechsel zwischen beiden Betriebsmodi ist in der Regel im Fahrgastraum 18 ein Bedienelement vorgesehen, über welches der Bediener einen der Betriebsmodi auswählt.

Alternativ dazu ist eine Ausführung der Vorrichtung 16 vorgesehen, bei der die Nutzwärme nicht direkt über das Heizelement 24 in die Luft im Belüftungssystems eingekoppelt wird, sondern stattdessen, wie in FIG 3 dargestellt, zunächst in einem Wasserkreislauf 32 zwischengespeichert wird. Die Nutzwärme wird dazu mit Hilfe eines Heizwiderstandes 24, der hier als Tauchsieder ausgeführt ist, in den Wasserkreislauf 32 eingekoppelt. Jener Wasserkreislauf 32 umfasst vorzugsweise ein Wasserreservoir 34, einen zuschaltbaren primären Wärmetauscher 36, um bei Bedarf Wärme an die Umgebung abzugeben, und einen zuschaltbaren sekundären Wärmetauscher 38, um bei Bedarf Wärme in das Belüftungssystem einzukoppeln. Die Steuerung des Wärmestroms über das Belüftungssystem in den Fahrgastraum 18 erfolgt dementsprechend in diesem Ausführungsbeispiel nicht durch die Steuerung des Stroms, der durch den Heizwiderstand 24 fließt, sondern durch Koppelung und Entkoppelung des Belüftungssystems vom Wasserkreislauf 32 mit Hilfe des steuerbaren sekundären Wärmetauschers 38.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

## Patentansprüche

1. Verfahren zum Aufladen eines Akkumulators (10) eines Elektro- oder Hybridfahrzeugs (4) mit Hilfe eines Energierückgewinnungssystems (2), **dadurch gekennzeichnet, dass** ein Teil der mit dem Energierückgewinnungssystems (2) generierten elektrischen Energie in Nutzwärme umgewandelt wird, um damit die Temperatur im Innenraum (18) des Elektro- bzw. Hybridfahrzeugs (4) zu regulieren.

2. Verfahren nach Anspruch 1, **dadurch gekennzeichnet, dass** zur Bildung des Energierückgewinnungssystem (2) der Elektromotor (6) des Elektro- bzw. Hybridfahrzeugs (4) sowie eine zwischen Elektromotor (6) und Akkumulator (10) geschaltete Wandlerschaltung (8) eingesetzt werden.

3. Verfahren nach Anspruch 1 oder 2, **dadurch gekennzeichnet, dass** zur Erzeugung der Nutzwärme ein Heizwiderstand (24) eingesetzt wird.

4. Verfahren nach den Ansprüchen 2 und 3, **dadurch gekennzeichnet , dass** der Heizwiderstand (24) in die Wandlerschaltung (8) integriert ist.

5. Verfahren nach Anspruch 3 oder 4, **dadurch gekennzeichnet, dass** die Nutzwärme mittels gerichtetem Luftstrom in den Innenraum (18) transportiert wird.

6. Verfahren nach einem der Ansprüche 1 bis 5, **dadurch gekennzeichnet, dass** die Nutzwärme zwischengespeichert wird.

7. Verfahren nach Anspruch 6, **dadurch gekennzeichnet, dass** die Nutzwärme in einem Kühlkreislauf (32) des Elektro- bzw. Hybridfahrzeugs (4) zwischengespeichert wird.

8. Verfahren nach einem der Ansprüche 1 bis 7, **dadurch gekennzeichnet , dass** die Erzeugung der Nutzwärme im Bedarfsfall vom Bediener des Elektro- bzw. Hybridfahrzeugs (4) ausgesetzt wird.

9. Antriebseinheit (2) für ein Elektro- bzw. Hybridfahrzeug (4) umfassend eine Wandlerschaltung (8) und Mittel (16,20,22) zur Ausführung des Verfahrens nach einem der vorherigen Ansprüche.
